Europäisches Patentamt

European Patent Office

Office européen des brevets

(11) Veröffentlichungsnummer : **0 078 917**
**B1**

# (12) EUROPÄISCHE PATENTSCHRIFT

(45) Veröffentlichungstag der Patentschrift :
28.11.84

(51) Int. Cl.³ : **B 23 B 31/10**

(21) Anmeldenummer : 82109219.4

(22) Anmeldetag : 06.10.82

(54) Spannfutter.

(30) Priorität : DE U 8130683

(43) Veröffentlichungstag der Anmeldung :
18.05.83 Patentblatt 83/20

(45) Bekanntmachung des Hinweises auf die Patenterteilung : 28.11.84 Patentblatt 84/48

(84) Benannte Vertragsstaaten :
AT CH DE FR GB IT LI NL SE

(56) Entgegenhaltungen :
CH-A-   311 887
DE-A- 2 052 037
DE-U- 7 907 323
DE-U- 8 130 683
US-A- 3 771 804

(73) Patentinhaber : Paul Forkardt GmbH & Co. KG
Rosenstrasse 44-46
D-4000 Düsseldorf 1 (DE)

(72) Erfinder : Steinberger, Josef
Sebastiansweg 30
D-4000 Düsseldorf 1 (DE)
Erfinder : Müller, Wilhelm
Am Eichelkamp 233
D-4010 Hilden (DE)

(74) Vertreter : Patentanwälte Dipl.-Ing. Alex Stenger
Dipl.-Ing. Wolfram Watzke Dipl.-Ing. Heinz J. Ring
Kaiser-Friedrich-Ring 70
D-4000 Düsseldorf 11 (DE)

## Beschreibung

Die Erfindung betrifft ein Spannfutter mit im Querschnitt T-förmigen Nuten zur Aufnahme von Nutensteinen zwecks Befestigen von Anschlägen oder Aufsatzteilen am Futterkörper oder an im Futterkörper radial beweglich geführten Grundbacken mittels mindestens einer in einen Nutenstein eingreifenden Befestigungsschraube.

Eine solche Vorrichtung ist aus der US-A- 3 771 804 bekannt.

Bei der bekannten Konstruktion können die in den T-förmigen Nuten entweder des Futterkörpers oder der Spannbacken verschiebbaren Nutensteine zusammen mit den an ihnen angeordneten Anschlägen oder Aufsatzteilen bei umlaufendem Spannfutter aus den Nuten herausgeschleudert werden, wenn die in die Nutensteine eingreifenden Befestigungsschrauben nicht ordnungsgemäß angezogen sind, weil die Lagesicherung der Nutensteine in den T-förmigen Nuten ausschließlich durch Kraftschluß mittels der Befestigungsschrauben erfolgt und keine formschlüssigen Anschläge vorhanden sind, die ein Austreten der Nutensteine aus den Nuten in radial nach außen verlaufender Richtung verhindern. Es hängt somit bei der bekannten Konstruktion ausschließlich von der Sorgfalt der Bedienungsperson ab, Unfälle durch vom Spannfutter abgeschleuderte Teile zu verhindern.

Der Erfindung liegt die Aufgabe zugrunde, mittels einfacher konstruktiver Maßnahmen bei einem Spannfutter der eingangs beschriebenen Art dafür zu sorgen, daß auch bei nicht ordnungsgemäß angezogenen Befestigungsschrauben ein Herausschleudern von Nutensteinen aus den T-förmigen Nuten des Futterkörpers bzw. der Spannbacken ausgeschlossen ist.

Die Lösung dieser Aufgabenstellung durch die Erfindung ist dadurch gekennzeichnet, daß die im Querschnitt T-förmige Nut an ihrem radial innenliegenden Ende mit einer durchgehenden Bohrung mit einem der Breite der Nut im Nutengrund entsprechenden Durchmesser mündet und daß mindestens der Nutengrund am radial außen liegenden Ende der Nut mir radialem Abstand vom Außenumfang endet.

Durch diese erfindungsgemäße Ausbildung sowohl des radial innen liegenden als auch des radial außen liegenden Endes der T-förmigen Nut ist es möglich, ein oder mehrere Nutensteine vom radial innen liegenden Ende her in die Nut einzuführen, an denen beliebige Anschläge oder Aufsatzteile mittels jeweils einer Befestigungsschraube befestigt werden können. Da mindestens der Nutengrund am radial außen liegenden Ende der Nut mit radialem Abstand vom Außenumfang endet, wird durch formschlüssige Anlage der Nutensteine verhindert, daß diese auch bei zu lockeren Befestigungsschrauben aus dem Futterkörper bzw. den Spannbacken herausgeschleudert werden, wenn das Spannfutter umläuft. Hierdurch ergibt sich eine erhebliche Steigerung der Unfallsicherheit des erfindungsgemäßen Spannfutters, und zwar mit einfachem technischen Aufwand und unabhängig von der Sorgfalt der jeweiligen Bedienungsperson.

Gemäß einem weiteren Merkmal der Erfindung ist das radial außen liegende Ende des Nutengrundes mit einem der durchgehenden Bohrung entsprechenden Radius abgerundet, so daß in der radial am weitesten außen liegenden Endstellung des Nutensteines, der im Bereich des Nutengrundes einen kreisförmigen Querschnitt hat, eine flächige Anlage erzielt wird.

Bei einer bevorzugten Ausführungsform kann die am radial innen liegenden Ende ausgebildete Bohrung zugleich als Ansenkung für den Kopf einer Futterbefestigungsschraube ausgebildet sein. Hierdurch kann der Arbeitsaufwand reduziert werden, obwohl es selbstverständlich auch möglich ist, die Bohrungen für die Futterbefestigungsschrauben außerhalb des Bereiches der T-förmigen Nuten im Futterkörper auszubilden.

Bei einer alternativen Ausführungsform der Erfindung wird zur Lösung der voranstehend geschilderten Aufgabenstellung die im Querschnitt T-förmige Nut unter einem spitzen Winkel zur Oberfläche ausgeführt. Hierdurch ergibt sich selbsttätig eine Verklemmung zwischen dem Futterkörper bzw. der Spannbacke einerseits und dem mittels einer Befestigungsschraube mit dem Anschlag oder Aufsatzteil verbundenen Nutenstein andererseits, weil die in radial nach außen weisender Richtung zunehmende Tiefe der Nut selbsttätig zu einer Erhöhung des Kraftschlusses zwischen Nutenstein und Nut führt, je weiter der Nutenstein durch das umlaufende Spannfutter radial nach außen verschoben wird. Bei einer bevorzugten Ausführungsform verläuft die Nut unter einem Winkel von 5 bis 10° zur Oberfläche.

Bei beiden Ausführungsmöglichkeiten der Erfindung erfolgt ein zuverlässiges Festhalten der Nutensteine im Futterkörper bzw. in den Spannbacken. Während die erste Ausführungsform selbst einzelne, nicht mit Befestigungsschrauben und Anschlägen oder Aufsatzteilen versehene Nutensteine festhält, sorgt die zweite Ausführungsform dafür, daß Nutensteine mit nicht ordnungsgemäß angezogenen Befestigungsschrauben vor einem Herausschleudern geschützt sind.

Auf der Zeichnung sind zwei Ausführungsbeispiele des erfindungsgemäßen Spannfutters dargestellt, und zwar zeigen :

Figur 1 eine Stirnansicht eines Spannfutters mit im Futterkörper in radialer Richtung ausgebildeten T-förmigen Nuten zum Befestigen von Anschlägen oder Aufsatzteilen,

Figur 2 einen Teilschnitt gemäß der Schnittlinie II-II durch das Spannfutter nach Fig. 1,

Figur 3 eine Stirnansicht einer zweiten Ausführungsform eines Spannfutters, bei welchem die T-förmigen Nuten unter einem spitzen Winkel zur Oberfläche verlaufen,

Figur 4  einen Teilschnitt gemäß der Schnittlinie IV-IV in Fig. 3 durch die zweite Ausführungsform.

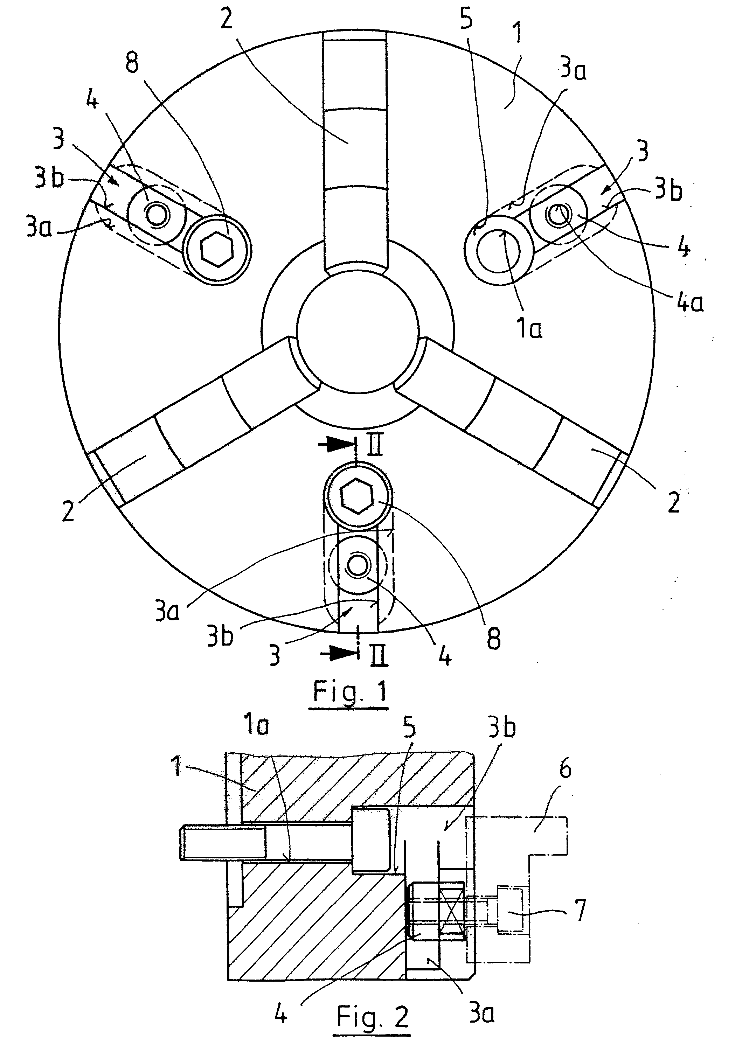

In den Fig. 1 und 2 ist ein Spannfutter gezeigt, in dessen Futterkörper 1 drei Spannbacken 2 radial beweglich geführt sind. Der Antrieb dieser Spannbacken 2 kann auf beliebige Weise geschehen.

Zwischen den Spannbacken 2 sind im Futterkörper 1 radial ausgerichtete Nuten 3 ausgebildet, die einen T-förmigen Querschnitt besitzen, so daß die Breite des Nutgrundes 3a größer ist als die Breite der Nutöffnung 3b in der Oberfläche des Futterkörpers 1. Diese Nuten 3 dienen zur Aufnahme von entsprechend ausgebildeten Nutensteinen 4, die mit einer Gewindebohrung 4a zur Aufnahme von Befestigungsschrauben versehen sind, mit welchen beliebige Anschläge oder Aufsatzteile an der Stirnseite des Futterkörpers 1 befestigt werden können.

Um die Nutensteine 4 in die Nuten 3 einsetzen zu können, mündet jede Nut 3 an ihrem radial innen liegenden Ende in einer durchgehenden Bohrung 5, die einen der Breite der Nut im Nutengrund 3a entsprechenden Durchmesser aufweist. Dieser Durchmesser ist geringfügig größer als der Außendurchmesser der Nutensteine 4, wie aus dem rechten Teil der Fig. 1 hervorgeht.

Am radial außen liegenden Ende der Nut 3 endet mindestens der Nutengrund 3a mit radialem Abstand vom Außenumfang des Futterkörpers 1, wie dies in Fig. 1 deutlich zu erkennen ist. Die Darstellungen zeigen, daß das radial außen liegende Ende des Nutengrundes 3a mit einem der Bohrung 5 entsprechenden Radius abgerundet ist. Hierdurch wird erreicht, daß die Nutensteine 4 am radial außen liegenden Ende nicht aus den Nuten 3 austreten können, beispielsweise wenn Nutensteine 4 versehentlich in den Nuten 3 vergessen worden sind oder die in die Nutensteine 4 eingreifenden Befestigungsschrauben für Anschläge oder Aufsatzteile nicht ordnungsgemäß festgezogen worden sind. Diese durch formschlüssige Anlage erzielte Unfallsicherheit wird auf einfache Weise dadurch erzielt, daß der Nutengrund 3a zum Außenumfang des Futterkörpers 1 nicht durchgefräst wird. Selbstverständlich ist es auch möglich, die Nutöffnung 3b nicht vollständig bis in den Außenumfang des Futterkörpers 1 durchzuführen.

In Fig. 2 ist mit strichpunktierten Linien ein Anschlag 6 dargestellt, der mittels einer Befestigungsschraube 7 über den Nutenstein 4 an der Stirnseite des Futterkörpers 1 befestigt ist. Außerdem ist in Fig. 2 eine Futterbefestigungsschraube 8 zu erkennen, die sich in einer Durchgangsbohrung 1a befindet, welche in Verlängerung der Bohrung 5 mit geringerem Durchmesser ausgeführt ist, wobei durch eine Vertiefung der Bohrung 5 diese zugleich als Ansenkung für den Kopf der Futterbefestigungsschraube 8 verwendet wird.

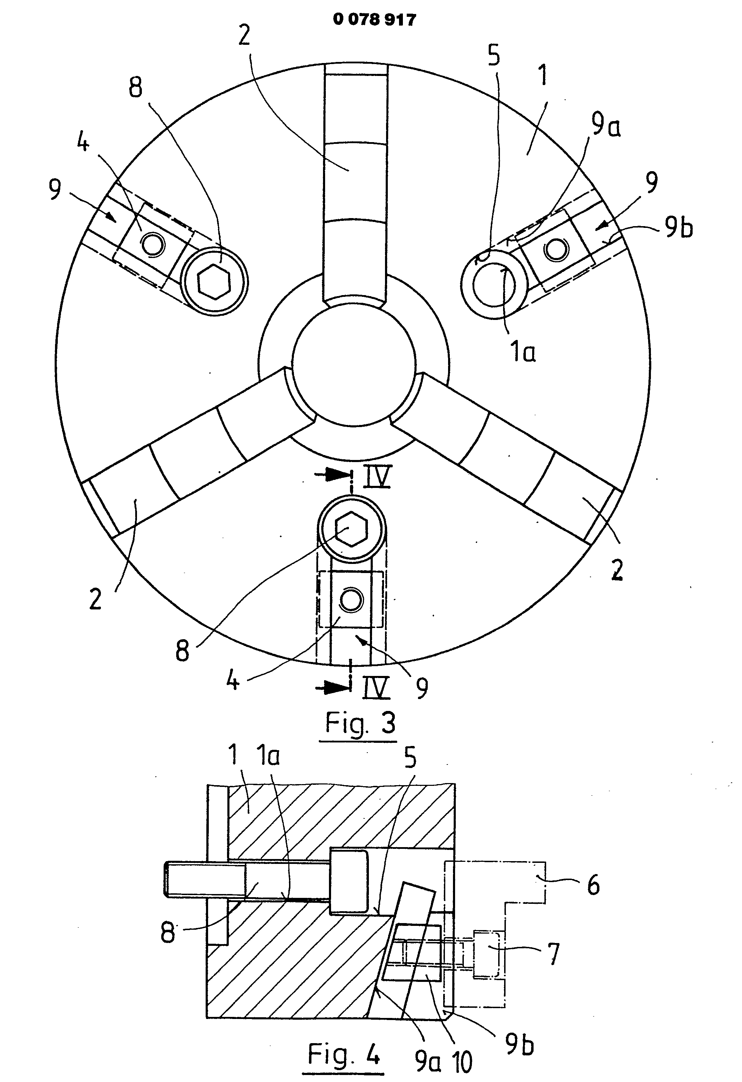

Auch das zweite Ausführungsbeispiel nach den Fig. 3 und 4 zeigt einen mit drei Spannbacken 2 versehenen Futterkörper 1, in welchem zwischen den Spannbacken 2 radial verlaufende Nuten 9 ausgebildet sind. Auch diese Nuten 9 besitzen einen T-förmigen Querschnitt, wobei der Nutengrund 9a am radial innen liegenden Ende in einer Bohrung 5 ausläuft, deren Durchmesser der Breite des Nutengrundes 9a entspricht und die zu einer Durchgangsbohrung 1a für eine Futterbefestigungsschraube 8 ausgebildet ist.

Abweichend von der ersten Ausführungsform verläuft bei der zweiten Ausführung nach den Fig. 3 und 4 der Nutengrund 9a nicht parallel zur Stirnfläche des Futterkörpers 1, sondern unter einem spitzen Winkel, so daß die Tiefe der Nuten 9 zum Außenumfang des Futterkörpers 1 zunimmt, wie aus Fig. 4 hervorgeht. Entsprechend diesem Winkelverlauf der T-förmigen Nut 9 ist auch der Nutenstein 10 ausgeführt, an dem wiederum mittels einer Befestigungsschraube 7 ein Anschlag 6 befestigt ist.

Auch für den Fall, daß die Befestigungsschraube 7 nicht ordnungsgemäß festgezogen ist, kann der Nutenstein 10 mit dem Anschlag 6 nicht aus dem radial außen liegenden Ende der Nut 9 bei umlaufendem Futterkörper 1 herausgeschleudert werden, weil durch die zunehmende Tiefe der Nut 9 ein Verklemmen zwischen dem Futterkörper 1 einerseits und dem Nutenstein 10 und dem Anschlag 6 andererseits erfolgt, und zwar um so stärker, je weiter der Nutenstein 10 radial nach außen verschoben wird. Auf diese Weise wird verhindert, daß ungenügend festgezogene Anschläge 6 infolge der Fliehkraft aus den Nuten 9 herausgeschleudert werden.

Obwohl bei den voranstehend beschriebenen Ausführungsbeispielen die T-förmigen Nuten 3 und 9 lediglich im Futterkörper 1 ausgebildet sind, können sie auch auf den Stirnflächen der Spannbacke 2 ausgeführt sein, wenn auf diesen Spannbacken 2 zusätzliche Anschläge oder Aufsatzteile befestigt werden sollen. Die Ausbildung und Wirkung der Nuten 3 bzw. 9 entspricht bei beiden Ausführungsformen den voranstehenden Darlegungen.

Schließlich ist es möglich, auch die Verbindung zwischen Grund- und Aufsatzbacken in der beschriebenen Weise auszuführen, indem die Grundbacken auf ihrer Stirnfläche mit T-förmigen Nuten 3 bzw. 9 versehen werden, in denen Nutensteine 4 bzw. 10 zur Befestigung der Aufsatzbacken geführt sind.

**Ansprüche**

1. Spannfutter mit im Querschnitt T-förmigen Nuten zur Aufnahme von Nutensteinen zwecks Befestigen von Anschlägen oder Aufsatzteilen am Futterkörper oder an im Futterkörper radial beweglich geführten Spannbacken mittels mindestens einer in einen Nutenstein eingreifenden Befestigungsschraube, dadurch gekennzeichnet, daß die im Querschnitt T-förmige Nut (3) an ihrem radial innenliegenden Ende in einer durchgehenden Bohrung (5) mit einem der Breite der Nut (3) im Nutengrund (3a) entsprechenden Durchmesser mündet und daß mindestens der Nutengrund (3a) am radial außen liegenden Ende der Nut (3) mit radialem Abstand vom Außenumfang endet.

2. Spannfutter nach Anspruch 1, dadurch gekennzeichnet, daß das radial außen liegende Ende des Nutengrundes (3a) abgerundet ist.

3. Spannfutter nach Anspruch 2, dadurch gekennzeichnet, daß die Abrundung mit einem der durchgehenden Bohrung (5) entsprechenden Radius ausgeführt ist.

4. Spannfutter mit im Querschnitt T-förmigen Nuten zur Aufnahme von Nutensteinen zwecks Befestigen von Anschlägen oder Aufsatzteilen am Futterkörper oder an im Futterkörper radial beweglich geführten Spannbacken mittels mindestens einer in einen Nutenstein eingreifenden Befestigungsschraube, dadurch gekennzeichnet, daß die im Querschnitt T-förmige Nut (9) unter einem spitzen Winkel zur Oberfläche mit in radial nach außen weisender Richtung zunehmender Tiefe ausgeführt ist.

5. Spannfutter nach Anspruch 4, dadurch gekennzeichnet, daß die Nut (9) unter einem Winkel von 3° bis 20° zur Oberfläche verläuft.

6. Spannfutter nach mindestens einem der Ansprüche 1 bis 5, dadurch gekennzeichnet, daß die Bohrung (5) am radial innen liegenden Ende der Nut (3 bzw. 9) zugleich als Ansenkung für den Kopf einer Futterbefestigungsschraube (8) ausgebildet ist.

## Claims

1. Chuck with T-shaped cross-section slots for receiving slot tongues for the purpose of securing stops or attachments to the chuck body or to jaws radially removably guided in the chuck body by means of at least one fixing screw engaging into a slot tongue, characterised in that the T-shaped cross-section slot (3) opens at its radially inner end into a through bore (5) with a diameter corresponding to the width of the slot (3) in the bottom of the slot (3a) and in that at least the bottom of the slot (3a) ends at the end of the slot (3) lying radially outwards at a radial distance from the outer periphery.

2. Chuck according to claim 1, characterised in that the end lying radially outwards of the bottom of the slot (3a) is rounded-off.

3. Chuck according to claim 2, characterised in that the rounding-off is formed with a radius corresponding to the through bore (5).

4. Chuck with T-shaped cross-section slots for receiving slot tongues for the purpose of securing stops or attachments to the chuck body or to jaws radially movably guided in the chuck body by means of at least one fixing screw engaging into a slot tongue, characterised in that the T-shaped cross-section slot (9) is formed at an acute angle to the surface with a depth increasing radially in an outward direction.

5. Chuck according to claim 4, characterised in that the slot (9) extends at an angle of 3° to 20° to the surface.

6. Chuck according to at least one of claims 1 to 5, characterised in that the bore (5) at the end lying radially inwards of the slot (3 or 9) is constricted at the same time as a recess for the head of a chuck-fixing screw (8).

## Revendications

1. Mandrin de serrage avec des rainures à section en forme de T pour recevoir des coulisseaux dans le but de fixer des butées ou des éléments rapportés sur le corps de mandrin ou sur des mors de serrage guidés pour se déplacer radialement dans le corps de mandrin, au moyen d'au moins une vis de fixation s'engageant dans un coulisseau, caractérisé en ce que la rainure (3) à section en forme de T débouche, à son extrémité, disposée vers l'intérieur dans le sens radial, dans un perçage traversant (5) ayant un diamètre correspondant à la largeur de la rainure (3) au fond de rainure (3a) et en ce qu'au moins le fond de rainure (3a) se termine, à l'extrémité de la rainure (3) disposée vers l'extérieur dans le sens radial, à distance radiale de la périphérie.

2. Mandrin de serrage selon la revendication 1, caractérisé en ce que l'extrémité du fond de rainure (3a) disposée vers l'extérieur dans le sens radial est arrondie.

3. Mandrin de serrage selon la revendication 2, caractérisé en ce que l'arrondi est réalisé avec un rayon correspondant au perçage traversant (5).

4. Mandrin de serrage avec des rainures à section en forme de T pour recevoir des coulisseaux dans le but de fixer des butées ou des éléments rapportés sur le corps de mandrin ou sur des mors de serrage guidés pour se déplacer radialement dans le corps de mandrin, au moyen d'au moins une vis de fixation s'engageant dans un coulisseau, caractérisé en ce que la rainure (9) à section en forme de T est réalisée sous un angle aigu par rapport à la surface avec une profondeur croissante en allant vers l'extérieur dans le sens radial.

5. Mandrin de serrage selon la revendication 4, caractérisé en ce que la rainure (9) s'étend sous un angle de 3° à 20° par rapport à la surface.

6. Mandrin de serrage selon au moins l'une des revendications 1 à 5, caractérisé en ce que le perçage (5) de l'extrémité de la rainure (3 ou 9) disposée vers l'intérieur dans le sens radial est agencé en outre en tant que logement pour la tête d'une vis (8) de fixation du mandrin.

0 078 917

Fig. 1

Fig. 2

1

0 078 917

Fig. 3

Fig. 4

2